# FASCICULE DE BREVET EUROPEEN

(11) **EP 1 542 805 B1**
(45) Date de publication et mention de la délivrance du brevet: **05.09.2007**
(21) Numéro de dépôt: 03772385.5
(22) Date de dépôt: 26.09.2003
(51) Int. Cl.: B02B 1/04, B02C 9/02, A23L 1/10, A23L 1/16

(54) **PROCEDE POUR LE TRAITEMENT A L'OZONE DE MATIERES VEGETALES**
VERFAHREN ZUR OZONBEHANDLUNG VON PFLANZENMATERIALIEN
DEVICE FOR OZONE TREATMENT OF PLANT MATERIALS

(30) Priorité: 27.09.2002 FR 0211970
(43) Date de publication de la demande: 22.06.2005
(73) Titulaire: Green Technologies Sarl, 35400 Saint Malo (FR)
(72) Inventeur: COSTE, Christian, F-84870 Loriol du Contat (FR); BAILLI, Alain, F-95180 Menucourt (FR); DUBOIS, Michel, F-78530 Buc (FR)
(74) Mandataire: Hart Davis, Jason
(86) Numéro de dépôt international: PCT/FR2003/002831
(87) Numéro de publication internationale: WO 2004/028695

(56) Documents cités:
- DE-A- 4 426 648
- US-A- 5 845 564
- PATENT ABSTRACTS OF JAPAN vol. 2002, no. 12, 12 décembre 2002 (2002-12-12) & JP 2002 218924 A (OHNIT CO LTD;ARITA SEIKO:KK), 6 août 2002 (2002-08-06)

## Description

La présente invention a pour objet un nouveau procédé de traitement à l'ozone de matières végétales, comprenant notamment le blé, les autres céréales et les légumineuses. Ce procédé de traitement à l'ozone peut notamment être mis en oeuvre en vue de la fabrication de farines dites « technologiques » à partir de grains de blé tendre. Il s'agit de farines dont les propriétés physiques et/ou chimiques ont été choisies pour répondre à certains critères nécessaires à leur utilisation ultérieure dans les industries de panification et de la pâtisserie. Ce procédé peut également être mis en oeuvre en vue de la fabrication de semoules et de pâtes alimentaires à partir de grains de blé dur.

### Arrière-plan technologique

Dans l'industrie céréalière de cuisson, un certain nombre de propriétés physiques et chimiques sont particulièrement recherchées pour les farines utilisées. Ces propriétés sont très souhaitables, non seulement en raison des facilités d'utilisation qu'elles génèrent et du faible coût qu'elles induisent dans le procédé de fabrication industriel, mais également en raison de la qualité qu'elles confèrent au produit concerné.

Ces propriétés doivent notamment répondre aux exigences suivantes :
a) Les producteurs de pains surgelés utilisent des procédés de pétrissage de plus en plus rapides qui exigent des farines s'hydratant de manière accélérée.
b) Les propriétés mécaniques des pâtes fabriquées à partir des farines doivent présenter des caractéristiques particulières qui sont déterminantes pour la formation et la structure du produit obtenu après cuisson. Ces caractéristiques principales sont : la ténacité, l'extensibilité, la tolérance et la porosité lors du développement.
   La ténacité et l'extensibilité concernent les pâtes destinées à la panification classique et ont une influence importante sur le développement et la structure du pain après cuisson, ainsi que sur la facilité du travail lors du processus de pétrissage et de façonnage.
   La tolérance est l'aptitude de la pâte à s'adapter à différents processus de fabrication.
   La porosité concerne surtout les cakes anglais dits « high ratio », ainsi que les génoises, où la structure alvéolaire naissante a une importance capitale sur le développement et le comportement lors du processus de cuisson (gonflement continu et homogène sans effondrement après la cuisson).
c) Il est souhaitable d'inactiver certains enzymes présents naturellement dans la farine afin d'une part, de contrôler les réactions produisant des substrats colorés, et d'autre part, de permettre une meilleure conservation générale du produit dans le temps. Les enzymes particulièrement impliqués dans la couleur de la mie sont la polyphénol oxydase et la lipoxygénase. En ce qui concerne la conservation, et particulièrement l'oxydation des lipides (à l'origine du rancissement), il s'agit principalement de la lipase.

Dans l'état de la technique, un certain nombre de méthodes de traitement ont été décrites, ces méthodes permettant de répondre à un ou à plusieurs des critères recherchés pour des farines. Ces méthodes ont cependant été appliquées essentiellement à des farines et non pas à des grains avant broyage.

Ainsi, le chlore et ses dérivés, dioxyde de chlore en particulier, et également le brome et ses dérivés, ont été utilisés pour traiter des farines dans le but de leur conférer des propriétés spécifiques. Ces traitements ont été notamment utilisés aux Etats-Unis, en Grande-Bretagne et dans les pays nordiques. Ces procédés, bien que très utiles pour les producteurs industriels de produits du type « cake anglais » et « génoise », se trouvent maintenant frappés d'interdiction législative, notamment en Europe. Les producteurs de ces produits sont donc contraints de rechercher d'autres solutions, vue l'inadaptation des farines classiques de blé tendre pour la fabrication de leurs produits.

Pour faire face à l'adaptation des farines à certains processus de fabrication, les meuniers ont coutume d'ajouter certains additifs pour modifier le comportement de la pâte fabriquée à partir de farines classiques. Par exemple, l'ajout d'amylases peut conduire à une amélioration du volume du produit obtenu, après cuisson, et à une meilleure hydratation de la farine lors de son mouillage et du pétrissage, et à un moindre rassissement du produit fini, caractéristiques directement liées à l'hydrolyse partielle de l'amidon de la farine par les amylases.

De la même façon, un ajout d'acide ascorbique à la farine permet d'améliorer la ténacité de la pâte.

Il y a cependant une demande de plus en plus forte de la part des consommateurs de réduire le nombre d'additifs ajoutés à la farine. Par conséquent, l'utilisation d'amylases et d'acide ascorbique, bien que permettant d'améliorer certaines propriétés physico-chimiques, est loin d'être entièrement satisfaisante.

Un nouveau type de traitement, qui ne repose pas sur l'ajout d'additifs, est le traitement thermique. Les traitements thermiques permettent de désactiver le gluten, c'est-à-dire d'empêcher la formation du réseau glutinique. Ces méthodes modifient également l'amidon en le prégélatinisant à un degré plus ou moins important. Ces méthodes permettent donc de contrôler certaines propriétés physiques et chimiques des farines.

Cependant, les traitements thermiques ne répondent qu'imparfaitement aux exigences des utilisateurs de farines, présentant divers inconvénients qui empêchent un usage optimum pour les applications considérées. Ils sont en particulier très consommateurs d'énergie et ils permettent difficilement d'obtenir un traitement homogène dans toute la masse de la farine traitée (existence d'un gradient de température dans la masse de la farine en cours de traitement). La fabrication de farines pour l'industrie céréalière de cuisson présente donc un certain nombre de problèmes qu'aucun procédé jusqu'ici décrit ne permet de résoudre de façon entièrement satisfaisante.

Un autre procédé de traitement à l'ozone avant broyage d'une matière végétale est décrit dans le document US 5 845 564 A.

### Résumé de l'invention

La Demanderesse a maintenant découvert de façon surprenante, que le traitement des grains de blé par de l'ozone avant mouture dans certaines conditions permet de répondre de façon très satisfaisante à ces problèmes en fournissant des farines présentant divers critères recherchés de propriétés physiques et chimiques, tout en offrant de surcroît une qualité bactériologique et sanitaire des farines qui n'est pas assurée par les techniques existantes.

Comme Il sera expliqué ci-dessous, les études de la Demanderesse démontrent que les conditions de traitement à l'ozone selon la présente invention permettent à ce dernier de pénétrer au coeur des tissus, voire des cellules, d'une matière végétale non encore broyée, dans laquelle ces structures (tissus, cellules) sont encore intactes.

L'ozone peut donc dans ces conditions réagir directement avec des biomolécules que renferment ces tissus ou cellules, de telles réactions ne se produisant pas lorsque des matières végétales non encore broyées sont traitées à l'ozone, selon des méthodes précédemment décrites dans l'art antérieur.

Dans la présente description, les études présentées se rapportent en particulier au traitement à l'ozone de grains de blé. Cependant, l'application du procédé présenté ici à des matières végétales autres que le blé est envisagée. Des matières végétales, utilisables dans ce procédé, comprennent les grains d'autres céréales que le blé, telles que le maïs, l'orge, le seigle, le triticale. L'application de ce procédé est aussi envisagée dans le cas de matières végétales comprenant des plantes légumineuses, telles que le soja, le pois, la caroube, le guar, ainsi que d'autres espèces comme le lin et les crucifères (choux, colza, moutarde). Dans le cas de plantes légumineuses, la modification des protéines à l'intérieur de tissus ou cellules peut présenter des avantages pour la fabrication après extraction de produits spécifiques contenant les protéines modifiées.

Selon un premier aspect, la présente demande vise à couvrir un procédé de traitement à l'ozone de matières végétales non encore broyées, comprenant au moins les étapes suivantes :
a) pré-humidification de ladite matière végétale par ajout d'un volume d'eau ;
b) phase de repos de ladite matière végétale ainsi humidifiée ;
c) mise en contact de ladite matière végétale avec l'ozone ;
lequel procédé est caractérisé en ce que ladite phase de repos a une durée supérieure ou égale à 1 jour, en ce que le traitement à l'ozone est réalisé à l'aide d'un gaz ozoné sec et en ce qu'il comprend une humidification complémentaire réalisée simultanément à ou au maximum 10 minutes avant ladite mise en contact avec l'ozone dans des conditions permettant d'apporter de 3 à 10% en poids d'eau à ladite matière végétale par rapport au poids sec de la matière et de préférence de 3 à 5%.

Ainsi, pour atteindre le but recherché, Il a été constaté que les deux conditions suivantes, qui font l'originalité de ce procédé, doivent être respectées :
i) Entre la pré-humidification de la matière végétale qui est traitée et le traitement à l'ozone, il y a une phase de repos ayant une durée d'au moins 1 jour.
ii) Au moment du traitement à l'ozone, une quantité d'eau complémentaire est apportée à la matière, cette quantité étant de 3 à 10% en poids rapportée au poids sec de la matière végétale.

Plus particulièrement, la matière végétale comprendra préférentiellement des grains de blé, soit du blé tendre, soit du blé dur.

### Brève description des figures

L'invention sera mieux comprise à la lecture de la description explicative qui va suivre, faite en référence aux figures annexées, dans lesquelles :
La figure 1 représente une coupe histologique du grain de blé au niveau de la périphérie, qui fait apparaître les 3 couches principales (péricarpe, couche à aleurone et albumen), ainsi que les modes d'action simplifiés de l'ozone selon que l'on travaille en voie sèche ou en voie humide.
La figure 2 matérialise l'impact de la dose d'ozone sur l'alvéogramme obtenu sur l'alvéographe Chopin-Dubois, tous les autres paramètres du procédé étant égaux.

La courbe repérée 1 correspond à une farine classique, bien équilibrée, non traitée par l'ozone.

La courbe repérée 2 correspond à une pâte obtenue à partir de farine issue de grains préalablement traités à l'ozone et présentant une ténacité supérieure et une extensibilité inférieure à la pâte repérée 1.

Les courbes 3 et 4 correspondent à l'alvéogramme de pâtes obtenues à partir de farines issues de grains préalablement traités à l'ozone à dose croissante d'ozone et/ou en jouant sur l'humidification. Ces courbes matérialisent parfaitement l'action de l'ozone sur le paramètre ténacité, ainsi que sur celui de l'extensibilité.

La courbe 5 correspond à une pâte fabriquée à partir de farine dite « technologique » issue de grains préalablement traités à l'ozone dans les conditions optimales de modification des protéines. La courbe 5 correspond spécifiquement aux courbes théoriques recherchées pour la fabrication des cakes anglais dits « high ratio ». Cette courbe présente une ténacité maximum, égale ou supérieure à 150 et à une extensibilité minimum.

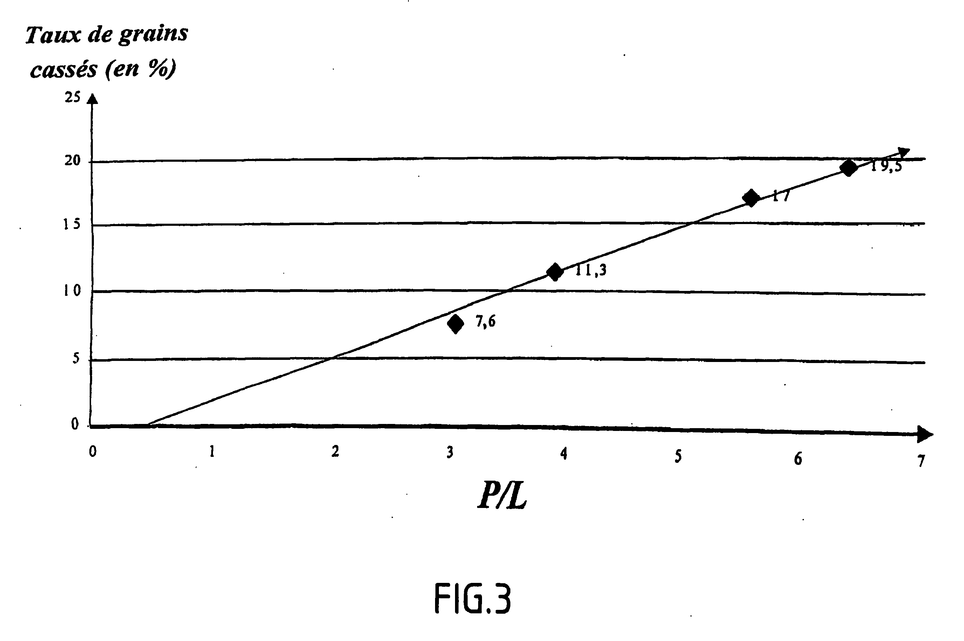

La figure 3 matérialise l'impact du taux de grains cassés sur l'évolution du rapport P/L obtenu au moyen de l'alvéographe Chopin-Dubois. Pour ce faire, la Demanderesse a procédé à la casse de grains en pourcentage variable, à l'addition de ces grains à des grains non cassés, puis au traitement de l'ensemble à des doses constantes d'ozone. A partir des farines obtenues après mouture, il a été pratique un test sur alvéographe Chopin-Dubois et le rapport P/L a été calculé.

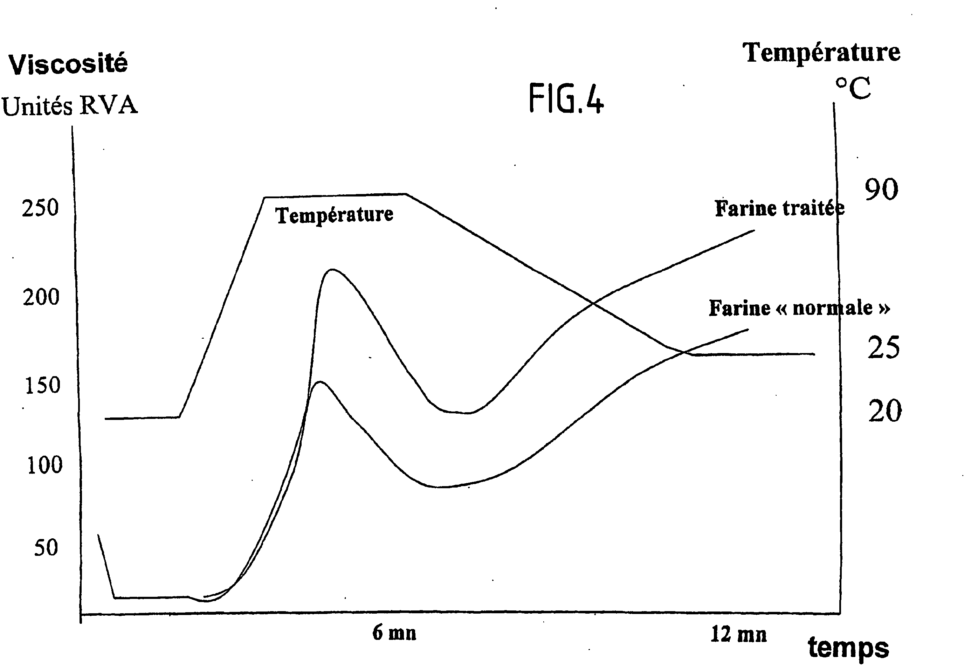

La figure 4 matérialise l'impact du traitement à l'ozone sur la viscosité d'une solution contenant de la farine en concentration de matière sèche bien définie, en fonction du temps, et selon un processus de montée en température, de stabilisation, puis de refroidissement.

Sur cette figure, sont représentées deux courbes correspondant à une farine normale non traitée et à une farine traitée suivant les paramètres revendiqués dans la présente demande.

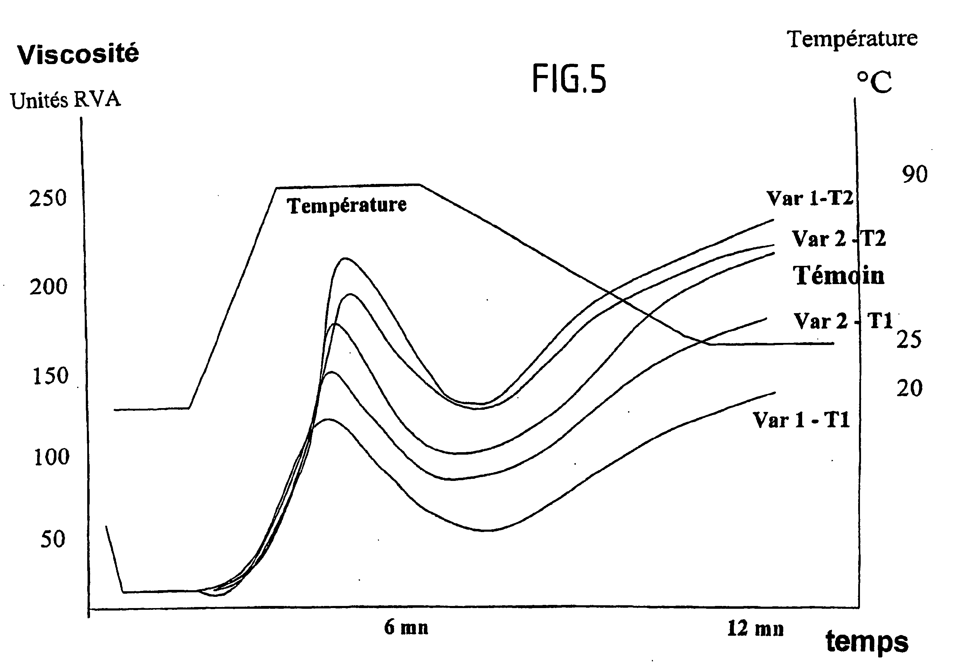

La figure 5 matérialise l'impact du pH de l'eau d'humidification complémentaire des grains sur la viscosité d'une farine obtenue à partir des grains traités selon un processus d'action, en profondeur, cette viscosité, étant étudiée par le processus RVA, comme pour les expériences représentées à la figure 4.

Les courbes représentatives de la variation de viscosité ont trait à deux variétés caractéristiques de blé tendre, qui sont, pour la variété 1, du blé tendre de type Courtot, c'est-à-dire un blé de force, la variété 2 correspond à un blé de type Shango, c'est-à-dire un blé tendre panifiable courant. Le témoin corresponde un blé de mélange pour panification courante.

### Description générale de l'invention

Dans une demande précédente, publiée sous le n° WO 01/43556, la demanderesse a déjà décrit l'utilisation de l'ozone dans le traitement des grains de blé tendre dans la fabrication de farines.

Cette demande décrit une enceinte de traitement de grains à l'ozone qui peut être utilisée dans le cadre de la présente invention. Cependant, dans cette demande antérieure, aucune étude relative aux effets d'un temps de repos allongé entre la pré-humidfication et les traitements à l'ozone et aucune étude relative aux effets d'un apport d'eau « complémentaire » au moment du traitement à l'ozone n'ont été réalisées ou suggérées.

Bien que cela ne doive pas être interprété comme limitant le domaine d'application de la présente invention, la Demanderesse propose l'explication suivante des résultats qu'elle a observé avec le procédé conforme à l'invention.

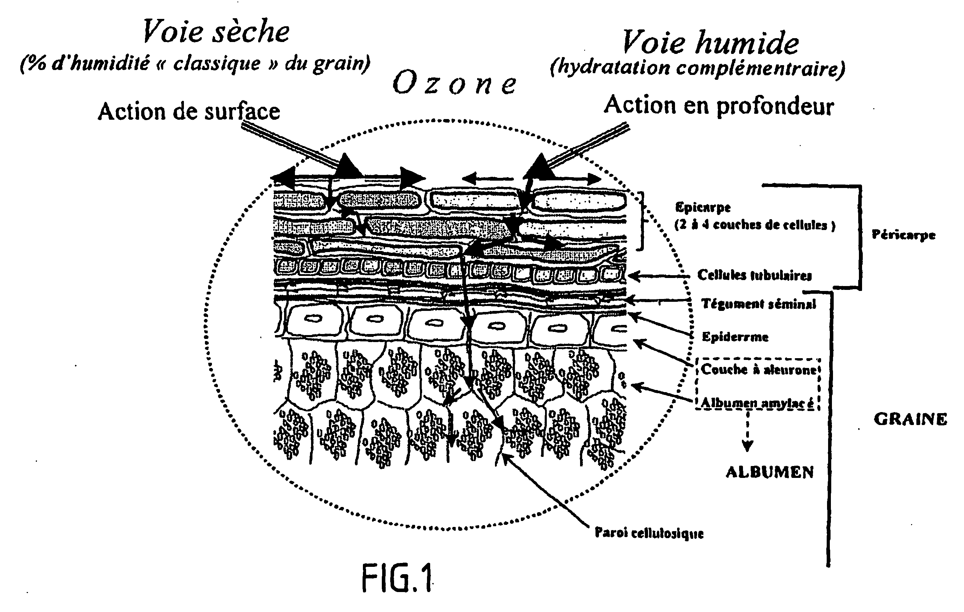

Un procédé typique d'ozonation, tel que l'exécuterait un homme du métier réalisant le procédé décrit dans des plages de valeurs avantageuses de la demande de brevet WO 01/43556, où l'ozone est surtout mis en oeuvre afin d'assurer la sécurité sanitaire et bactériologique, conduit à une action superficielle de l'ozone sur le grain. Or, dans le cadre de la présente invention, l'ozone peut effectuer des modifications en profondeur dans le grain de blé. La pénétration de l'ozone au coeur du grain, grâce aux conditions particulières de la présente invention, permet à cette molécule réactive d'agir sur les protéines (le gluten), l'amidon, les enzymes et les pentosanes. L'effet de l'ozone sur et dans les grains de blé peut être résumé de façon synthétique par la figure 1. La figure 1 représente une coupe histologique du grain de blé au niveau de la périphérie, qui fait apparaître les 3 couches principales (péricarpe, couche à aleurone et albumen), ainsi que les modes d'action simplifiés de l'ozone selon que l'on travaille en voie sèche ou en voie humide.

La voie sèche correspond au traitement par l'ozone d'un grain de blé présentant une humidité conforme à l'humidité naturelle lors de sa récolte ou de son stockage (entre 13 et 15% d'humidité par rapport au poids total). Dans ce cas, l'action de l'ozone se situe préférentiellement en périphérie du grain et aura donc une action de surface (réaction avec l'ensemble des composés chimiques ou organiques présents sur ladite surface). La pénétration de l'ozone à l'intérieur du grain est très faible.

La voie humide correspond au traitement par l'ozone d'un grain de blé ayant subi une hydratation complémentaire conforme aux données et aux paramètres de traitement du procédé décrit dans la présente demande. Dans ce cas, l'action de l'ozone se situe en profondeur, l'ozone réagissant sur les composants des 3 couches précédemment décrites.

La Demanderesse considère que plus le temps de repos, c'est-à-dire le temps s'écoulant entre la pré-humidification et la phase de traitement par l'ozone (aussi appelé « temps de conditionnement ») est long, plus l'humidité pénètre le grain, dilate les micropores et favorise des conduits d'échanges rapides et de pénétration de l'ozone à l'intérieur du grain.

La dilatation de ces micropores (voir figure 1) a une importance capitale sur le déroulement des réactions chimiques générées par l'ozone à l'intérieur du grain. La dilatation des micropores, la création de conduits réactifs, la présence d'humidité et par conséquent d'un microfilm d'eau à l'intérieur de ces pores, favorise l'échange gaz-solide et l'action de l'ozone dans la profondeur du grain.

La Demanderesse a observé qu'un temps de 24 heures de repos entre la phase de pré-humidification et la phase de traitement par l'ozone est le minimum suffisant pour la plupart des applications recherchées. Cependant, ce temps peut être modifié en fonction de l'espèce variétale de blé, ou de la qualité du blé, que l'on souhaite traiter.

Parallèlement, les études de la Demanderesse ont démontré qu'un apport d'eau aux grains, au moment même ou au maximum 10 minutes avant l'ozonation, est essentiel pour que l'ozone agisse au coeur du grain.

La nature des blés liés à leur espèce variétale fait que la constitution des couches périphériques est différente d'une variété à l'autre, ce qui induit une cinétique de pénétration de l'eau différente d'une variété à l'autre.

Le procédé de l'invention est également parfaitement adapté à la fabrication de produits par broyage des grains de blé dur (semoules ou farines).

La Demanderesse a en effet découvert de façon surprenante que le traitement à l'ozone, selon l'invention, était intéressant, non seulement pour des grains de blé tendre, mais également pour des grains de blé dur. La filière blé dur rencontre de nombreux problèmes, différents de ceux affectant ta filière blé tendre, et qui n'ont pas trouvé de solutions entièrement satisfaisantes jusqu'à présent :
a) Dans le cas du blé dur, il existe une contamination très lourde par les mycotoxines, et tout particulièrement par le DON (déoxynivalénone). Une telle contamination résulte de l'affinité des champignons du genre Fusarium pour le blé dur.
b) La maîtrise de la couleur des semoules présente des problèmes particuliers :
   1. La couleur jaune normale des semoules peut être blanchie par la lipoxygénase naturelle, ce qui entraîne le refus de ces semoules blanchies par le consommateur.
   2. La PPO (polyphénol oxydase), qui, tout comme la lipoxygénase, est présente de façon naturelle dans le blé dur, a en revanche tendance à brunir les semoules, ce qui entraîne également un refus chez le consommateur.

La Demanderesse a découvert que le traitement des blés durs à l'ozone permet de fabriquer des farines et des semoules dans lesquelles l'inhibition de la lipoxygénase et de la polyphénol oxydase permet de conserver au maximum la coloration jaune recherchée pour les semoules et d'éviter toute possibilité d'un brunissement ultérieur. Naturellement, plus l'ozone peut pénétrer à l'intérieur du grain, plus l'inhibition de ces enzymes est assurée.

### Description détaillée du procédé de la présente invention

On précisera dans ce qui suit, les conditions qui permettent de fabriquer des farines ayant les propriétés physiques et chimiques recherchées, par le traitement de grains de blé.

Les grains de blé, après récolte et stockage, présentent une humidité naturelle comprise entre 13 et 15% suivant les conditions climatiques de la récolte. La mesure de l'humidité des grains peut être réalisée par diverses méthodes bien connues de l'homme du métier; impliquant par exemple les analyses automatiques NIR (Near Infra Red, ou encore proche infra rouge).

La première étape dans la fabrication de farines à partir de tels grains est une étape dite de pré-humidification, qui est appelée «conditionnement» par l'homme du métier. Cette étape, qui est obligatoirement précédée par une étape de nettoyage et d'enlèvement de poussières et corps étrangers, par exemple par soufflage, tamisage etc., a pour but d'amener l'humidité dés grains à environ 16 à 18%. D'une manière générale, l'eau apportée dans le cadre de la pré-humidification du grain préalable au traitement à l'ozone permet d'augmenter l'humidité dés grains d'une valeur préférentiellement comprise entre 3% et 5% par rapport au poids sec des grains. La pré-humidification confère aux grains des propriétés particulières, aussi bien lors du traitement à l'ozone que lors du broyage.

La pré-humidification est réalisée avec une source d'eau, préférentiellement avec de l'eau de qualité potable. Au moment de la pré-humidification, il est préférable d'utiliser une eau qui ne contient pas d'agent oxydant. Il n'est donc pas nécessaire d'utiliser une eau ozonée comme le préconise l'enseignement de la demande WO 01/43556.

Suite à la pré-humidification des grains, ceux-ci sont laissés dans l'état dans une phase dite « de repos » avant le traitement ultérieur à l'ozone. La Demanderesse a trouvé que cette phase de repos doit durer au moins 1 jour. Il a en effet été constaté qu'un temps de repos insuffisamment long, inférieur à environ 24 heures, ne permet pas à l'ozone lors du traitement d'atteindre le coeur du grain et donc de procurer les effets désirés. En effet, le temps de repos a une action directe sur la pénétration de l'humidité et par voie de conséquence sur l'action ultérieure de l'ozone à l'intérieur du grain. Une modulation de ce temps entraîne une modulation des effets de l'ozone.

Bien que le procédé selon l'invention puisse donner des résultats techniquement acceptables avec des temps de repos supérieurs à 72 h, le souci de faire une utilisation économiquement efficace du réacteur induit le choix d'un temps de repos inférieur ou égal à 72 heures. Le temps de repos sera donc de préférence compris entre 1 et 3 jours. Plus préférentiellement, le temps de repos du procédé de la présente invention se situera entre 36 et 48 heures.

Après la phase de repos, les grains sont soumis à un traitement spécifique comprenant leur mise en contact avec de l'ozone dans un réacteur à agitation continue, tel que décrit dans la demande WO 01/43556.

Avantageusement, on utilisera ici un gaz ozoné sec ayant un point de rosée compris entre -60 et -80°C. Ce gaz peut être produit par des procédés classiques à partir de gaz vecteurs qui peuvent être l'oxygène de l'air, l'oxygène pur ou un mélange des deux. Un ozoneur permet de produire un gaz vecteur ozoné sec à partir d'une source d'oxygène sèche.

La quantité d'ozone utilisée se situe entre 6 et 20 g/kg de grains et de préférence entre 7 et 13 g/kg de grains. Bien entendu, la quantité précise dépend de la nature du blé et des résultats attendus.

Lorsqu'un gaz vecteur est utilisé, la concentration d'ozone dans le gaz vecteur se situe typiquement entre 60 et 200 g/m³ tpn, et de préférence entre 80 et 140 g/m³ tpn.

La pression de gaz vecteurs ozonés dans le réacteur lors du traitement se situe typiquement entre 200 et 1100 mbars et de préférence entre 600 et 800 mbars.

En fonction de la concentration et de la pression d'ozone dans le réacteur, l'homme du métier pourra choisir une durée de mise en contact appropriée pour le traitement à l'ozone. Cette durée sera généralement de l'ordre de trente (30) à soixante (60) minutes.

La Demanderesse a observé que, dans le cadre de la mise en contact du grain avec l'ozone, il convient d'ajouter une quantité d'eau dite « complémentaire » au grain. Cette quantité d'eau se situe entre 3 et 10%, de préférence entre 3 et 5% par rapport au poids sec des grains. La quantité d'eau utilisée peut être dosée par débimétrie massique ou une autre méthode bien connue de l'homme du métier. Compte tenu du fait que l'étape de pré-humidification a pour effet d'amener le taux d'humidité des grains à une valeur préférentiellement située entre 16 et 18%, l'effet de l'ajout d'eau « complémentaire » sera d'augmenter l'humidité des grains jusqu'à une valeur préférentiellement comprise entre 19 et 28% , plus préférentiellement entre 19 et 23%.

Avantageusement, l'eau servant à l'humidification dite « complémentaire » est apportée sous forme d'un brouillard de gouttelettes très fines par pulvérisation sous pression sur les grains dans une enceinte close qui peut être le réacteur de traitement lui-même ou un dispositif annexe. Durant cette phase d'humidification complémentaire, la masse de grains doit être animée d'un mouvement de telle sorte que le film liquide déposé soit homogène et intéresse la totalité des grains.

De préférence, on apporte l'eau « complémentaire » aux grains simultanément à la mise en contact avec l'ozone. Par simultanément, on entend que l'eau est apportée au cours même de la réaction avec l'ozone. De façon alternative, l'eau peut être apportée un certain temps avant l'arrivé de l'ozone dans le réacteur, ce temps étant au maximum de 10 minutes avant l'introduction de l'ozone et de préférence de 2 à 3 minutes.

Dans un mode particulièrement préféré de réalisation de la présente invention, l'eau servant à l'humidification complémentaire contient un agent modificateur de pH.

La Demanderesse a en effet découvert que la modification du pH de l'eau servant à l'humidification complémentaire est un moyen particulièrement intéressant pour moduler à volonté les propriétés physico-chimiques des farines issues du procédé de traitement des grains selon l'invention. Ainsi, l'utilisation d'une substance permettant d'atteindre un pH basique entre 8 et 12 permet en général d'augmenter la viscosité de la pâte. La basification de l'eau servant à l'humidification complémentaire, dans un tel cas, peut être réalisée en utilisant une base agréée pour l'utilisation dans un contexte agroalimentaire, telle que la soude alimentaire, le carbonate de sodium, le bicarbonate de sodium.

Il peut également être intéressant d'avoir des pâtes présentant une viscosité moindre, cas dans lequel la Demanderesse a montré que l'utilisation d'un pH de 3 à 6 pour l'eau servant à l'humidification complémentaire est particulièrement utile. Des acides permettant d'atteindre ce pH et agréés pour l'utilisation dans l'agroalimentaire comprennent par exemple l'acide citrique, l'acide acétique, ou tout acide faible de qualité alimentaire.

### Méthodes de mesures des propriétés physiques et chimiques des farines résultant du traitement à l'ozone

Pour confirmer l'intérêt du procédé qui vient d'être décrit, la Demanderesse a utilisé et développé plusieurs méthodes de mesures de propriétés physiques et chimiques permettant d'évaluer l'aptitude des farines obtenues à être utilisées dans des procédés de fabrication de produits de consommation par l'industrie céréalière de cuisson.

Ainsi :
1) Les propriétés mécaniques d'une pâte lors de la fermentation (extension, ténacité, gonflement), et lors de la cuisson (porosité, effondrement au refroidissement) ont été évaluées en utilisant l'alvéographe Chopin-Dubois.
2) L'évolution de la viscosité d'une solution contenant de la farine au cours d'un traitement thermique suivi d'un refroidissement a été étudiée au moyen de la méthode dite de RVA (Rapid Viscosity Analysis) ; d'autres moyens de mesure pouvant être utilisés à cet effet, et en particulier un viscosimètre Brabender.
3) La couleur de la mie des produits obtenus à partir de farines a été suivie au cours du temps par confrontation de la couleur à des témoins frais.
4) Le temps de conservation, en présence d'air, des farines obtenues suite au traitement des grains de blé à l'ozone selon la présente invention, a été étudié par la mesure de l'acidité grasse.
5) Des procédés d'analyses chimiques ont en outre été utilisés pour suivre l'évolution biochimique des grains. En particulier, on a suivi le taux de maltose dans les grains et mesuré l'apparition du MDA (malondialdéhyde). L'apparition de maltose est un indice probant de l'hydrolyse de l'amidon. La concentration naturelle du maltose dans les grains est de l'ordre de 300 mg/100 g de grains, et un taux de maltose très supérieur à cette valeur indique un certain métabolisme de l'amidon. En revanche, l'apparition du MDA est corrélée avec l'activité d'enzymes participant à des processus oxydants.

Dans le tableau 1 sont résumés des exemples de paramètres de traitement à l'ozone de grains de blé. Cinq lots de grains de blé ont été traités à l'ozone en variant divers paramètres du procédé, notamment le temps de repos, la quantité d'eau complémentaire ajoutée et le pH de cette eau. Les résultats des mesures de viscosité, d'alvéogramme, etc... sont donnés pour chaque choix de paramètres du procédé. La comparaison avec un échantillon de blé n'ayant pas subi d'ozonation est également présentée.

Les blés testés étaient des mélanges de différentes variétés de blés réputées panifiables. Dans d'autres séries d'essais, des variétés pures panifiables supérieures ont été traitées ; la Demanderesse a dans ce cas précis obtenu des résultats de même nature que ceux donnés ci-après.

**TABLEAU 1**

| Exemples de produits ayant fait l'objet de mesures | | | | | | | |
|---|---|---|---|---|---|---|---|
| **Paramètres du traitement** | | Témoin | Traitement 1 | Traitement 2 | Traitement 3 | Traitement 4 | Traitement 5 |
| % d'eau complémentaire ajoutée par rapport au poids sec des grains | 2% | | X | | | X | |
| | 4% | | | X | X | | X |
| | 24h | | X | | | | X |
| Temps de repos | 48 h | | | X | X | X | |
| | 3 | | X | | | | |
| Dose de O₃ en g/kg de grains | 5 | | | | | X | |
| | 10 | | | X | | | X |
| | 12 | | | X | | | |
| pH de l'eau complémentaire | 4 | | | | X | | |
| | 7 | | X | | | X | X |
| Pression ozone | 350 mbar | | X | | | X | X |
| dans le réacteur | 800 mbar | | | X | X | | |

| **Mesures effectuées** | | | | | | | |
|---|---|---|---|---|---|---|---|
| | Pic | 150 | 170 | 215 | 190 | 200 | 210 |
| Viscosité RVA | Plateau | 170 | 185 | 255 | 210 | 225 | 240 |
| | P (mm de | 64 | 70 | 97 | 100 | 83 | 93 |
| | colonne d'eau) | | | | | 68 | 40 |
| Alvéogramme | L (mm) | 85 | 79 | 26 | 23 | 1,22 | 2,33 |
| Chopin-Dubois | P/L | 0,75 | 0,89 | 3,73 | 4,35 | 178 | 148 |
| | W(10⁻⁴J) | 187 | 186 | 124 | 104 | | |
| Taux d'amylase (mg/100 g) | | 220 | 2120 | 957 | 788 | 1316 | 1043 |
| MDA (oxydation des lipides en µg/100 g) | | 590 | 560 | 450 | 490 | 470 | 430 |

### RESULTATS

### 1) Effets de la dose d'ozone sur la mesure de l'alvéographe Chopin-Dubois

L'alvéographe Chopin-Dubois est un test qui repose sur les observations suivantes : lors de la fermentation panaire, une multitude de petites bulles de gaz carbonique (CO₂) se forme au sein de la pâte, lesquelles constituent des alvéoles plus ou moins importantes et plus ou moins nombreuses selon les propriétés plasto-élastiques du gluten qui les retient.

L'essai consiste donc à reproduire artificiellement ce phénomène en soumettant un échantillon de pâte, sous forme de rondelle dans des conditions bien déterminées (temps d'application, température, hydratation, à une pression d'air pour mesurer leur pouvoir d'extension).

L'appareil enregistre un graphique qui peut être interprété de la façon suivante :
- la hauteur de la courbe, qui mesure la pression P d'air maximal dans la pâte, détermine la résistance du gluten à la déformation. Elle matérialise la ténacité de la pâte. Plus P est important, plus la pâte résiste et à l'extrême se rétracte à l'allongement ;
- la longueur de la courbe L détermine le temps pendant lequel le gluten se laisse déformer sans se casser. La longueur L matérialise l'extensibilité. Plus L est importante, plus la pâte s'allongera facilement sans rupture. Cette valeur est en rapport avec le gonflement G de la bulle ;
- le W (aire sous la courbe) correspond au travail de déformation rapporté à un gramme de pâte. Il exprime la « force boulangère » ;
- le rapport P/L résume à lui seul l'équilibre entre la ténacité P et l'extensibilité L du gluten.

On considère qu'en première approche la mesure de l'alvéographe concerne les protéines. On sait que le pétrissage d'une farine en présence d'eau introduit de l'oxygène de l'air. Ce dernier oxyde les protéines de la farine (le gluten), ce qui permet la constitution d'agrégats protéiques transitoires, lesquels sont à l'origine de la création d'un réseau qui va supporter mécaniquement la pâte et permettre sa tenue lors de la phase de fermentation.

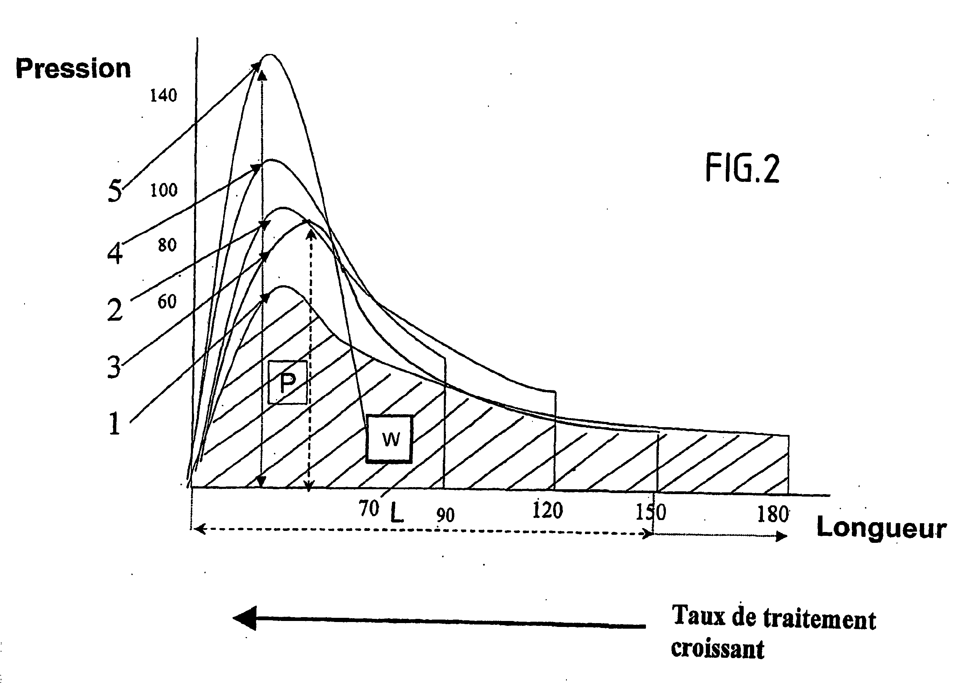

La figure 2 matérialise l'impact de la dose d'ozone sur l'alvéogramme obtenu sur l'alvéographe Chopin-Dubois, tous les autres paramètres du procédé étant égaux.

On constate un accroissement régulier, en fonction de la dose d'ozone appliquée, du rapport P/L (où « P » est la pression à laquelle est soumise la pâte et « L » l'allongement de la pâte). La courbe repérée 1 correspond à une farine classique, bien équilibrée, non traitée par l'ozone.

Lors de l'utilisation de faibles doses d'ozone, la pâte devient plus tenace. La courbe repérée 2 correspond ainsi à une pâte obtenue à partir de farine issue de grains préalablement traités à l'ozone et présentant une ténacité supérieure et une extensibilité inférieure à la pâte repérée 1. Il est à noter que cette modification d'alvéogramme - est très semblable à celle que l'on obtient par ajout d'acide ascorbique. Il est très intéressant de noter dans ce contexte que le traitement préalable du grain par l'ozone permet de supprimer l'adjonction d'acide ascorbique avant le pétrissage, répondant ainsi au désir précité d'éviter l'utilisation d'additifs.

Les courbes 3 et 4 correspondent à l'alvéogramme de pâtes obtenues à partir de farines issues de grains préalablement traités à- l'ozone à dose croissante d'ozone et/ou en jouant sur l'humidification. Ces courbes matérialisent parfaitement l'action de l'ozone sur le paramètre ténacité, ainsi que sur celui de l'extensibilité. A dose d'ozone plus forte, les pâtes deviennent donc beaucoup plus tenaces, mais également légèrement poreuses. Elles permettent, dans ce cas de figure, une amélioration de la tenue à la cuisson des cakes anglais dits « high ratio » ou des génoises, critère recherché par les industriels.

A dose très forte d'ozone, l'alvéogramme perd son plateau et sa dissymétrie, et prend la forme d'un pic, semblable à ce que l'on observe pour des farines chlorinées.

La courbe 5 correspond à une pâte fabriquée à partir de farine dite « technologique » issue de grains préalablement traités à l'ozone dans les conditions optimales de modification des protéines. La courbe 5 correspond spécifiquement aux courbes théoriques recherchées pour la fabrication des cakes anglais dits « high ratio ». Cette courbe présente une ténacité maximum, égale ou supérieure à 150 et à une extensibilité minimum. Dans ce cas ultime, le gluten modifié par l'ozone est à la fois très peu extensible et fortement poreux. Cette caractéristique lui permet d'être neutre dans la fabrication des produits riches en sucre, en autres protéines et en matières grasses, et d'éviter un gonflement excessif lors de la cuisson, suivi d'un effondrement au refroidissement. Une telle farine permet d'obtenir un gâteau qui lève plus lentement, se fige après levée, mais ne retombe pas après refroidissement.

### 2) Dosage du maltose issu de l'hydrolyse de l'amidon

Il a été observé par la Demanderesse que le traitement des grains de blé à l'ozone selon l'invention a pour conséquence, dans la mesure où l'ozone pénètre correctement à l'intérieur du grain, d'hydrolyser légèrement l'amidon. Cette hydrolyse de l'amidon peut être matérialisée par l'apparition d'un pic de maltose lors des analyses.

Le dosage du maltose est réalisé dans le cadre d'un dosage général des sucres. Les sucres sont séparés sur une colonne polymérique échangeuse d'anions optimisée pour l'analyse des sucres. Cette colonne travaille à pH basique. Les sucres dont le pKa varie entre 12 et 14 sont alors sous leur forme anionique et interagissent sélectivement avec les latex aminés de la résine.

Le principe de la détection est une réaction électrochimique d'oxydation : le courant créé est proportionnel à la concentration en sucres.

Le mélibiose est utilisé comme étalon interne afin de compenser les variations de réponses électrochimiques, variations dues à la phase mobile, à la température et à la nature de l'échantillon injecté.

Le taux de maltose dans des blés traités a été comparé à celui de blés témoins. La concentration naturelle du maltose dans le grain d'un blé non traité est de l'ordre de 300 mg/100 g de grains. Ce taux de maltose peut atteindre un maximum de 2000 mg/100 g de grains après un traitement à l'ozone dans les conditions décrites aux paragraphes précédents. L'apparition de ce pic Indique un certain métabolisme de l'amidon. Un traitement par l'ozone dans les conditions optimales, telles que découvertes par la Demanderesse, induit généralement une hydrolyse de l'amidon correspondant à une transformation massique de ce dernier, comprise entre 1 et 5%, préférentiellement de l'ordre de 3%. L'hydrolyse de l'amidon fait apparaître du maltose en quantité suffisante pour permettre le développement des levures et en conséquence de supprimer l'adjonction d'amylase.

### 3) Etude du traitement à l'ozone de lots de blés homogènes présentant un taux artificiellement augmenté de grains cassés

La Demanderesse a constitué des lots de blés homogènes dont on a augmenté artificiellement (par action mécanique), préalablement au traitement à l'ozone, le taux de grains cassés. L'augmentation du taux de grains cassés a été réalisée dans un premier temps dans un but de recherche. Cependant, la modulation du taux de grains cassés peut également constituer un moyen industriellement applicable pour contrôler les propriétés physiques et chimiques des farines résultant du procédé de la présente invention.

Sur le plan de la recherche, le contenu des grains cassés étant en contact direct avec l'ozone à l'intérieur du grain lors du traitement avec ce dernier, leur utilisation permet de mieux appréhender la nature des réactions provoquées par l'ozone.

Les grains traités par l'ozone, et dont le taux de grains cassés a été augmenté, ont été broyés selon le processus meunier, broyant ainsi les grains cassés et les grains encore intacts ensemble, et on a réalisé l'alvéogramme de manière à calculer la valeur du P/L sur la farine obtenue. Un exemple de la variation du rapport P/L, induite par un changement du taux de grains cassés, est montré à la figure 3.

La figure 3 matérialise l'impact du taux de grains cassés sur l'évolution du rapport P/L obtenu par le biais de l'alvéographe Chopin-Dubois. Pour ce faire, la Demanderesse a procédé à la casse de grains en pourcentage variable, à l'addition de ces grains à des grains non cassés, puis au traitement de l'ensemble à des doses constantes d'ozone. A partir des farines obtenues après mouture, il a été pratiqué un test sur alvéographe Chopin-Dubois et le rapport P/L a été calculé.

La Demanderesse a observé que la pente de la droite est très dépendante de la variété de blé utilisé. L'analyse du graphe n° 3 permet les interprétations suivantes :
- pour un taux de grains cassés évalué à 0% (qui ne compte ni les grains fêlés, ni les grains très légèrement abîmés, ce qui n'est pas évaluable), la modification du P/L est de l'ordre de 0,5, ce qui est inférieur à ce que l'on obtiendrait après adjonction dans la farine de 100 mg d'acide ascorbique/kg de farine, et ce, pour une même variété de blé. Les quatre points suivants correspondent à :

| | | |
|---|---|---|
| P/L = 3 | Taux de grains cassés : | 7,6% |
| P/L = 3,9 | Taux de grains cassés : | 11,3% |
| P/L = 5,6 | Taux de grains cassés : | 17,0% |
| P/L = 6,4 | Taux de grains cassés : | 19,5% |

Les interprétations qui peuvent être données de cette courbe sont les suivantes :
- les grains cassés offrent à l'action de l'ozone une accessibilité directe favorisant les réactions chimiques entre l'ozone et les protéines. Lors de la fabrication de la pâte et de son hydratation, le réseau glutinique, préalablement oxydé par l'ozone, est donc plus tenace, ce qui explique le P/L croissant en fonction du pourcentage de grains cassés ;
- les grains cassés offrent à l'action de l'ozone une accessibilité directe favorisant les réactions chimiques entre l'ozone et l'amidon. En conséquence, moins d'eau est disponible pour les protéines, ce qui favorise linéairement la ténacité du réseau glutineux. L'ozone favorisant l'absorption d'eau par l'amidon lors du pétrissage, l'hydratation relative du gluten est réduite en cas de traitement à l'ozone, donnant lieu à un rapport P/L fort.

### 4) Etude de la viscosité des solutions de farines dans le temps

La Demanderesse a découvert qu'il est très intéressant pour l'évaluation des propriétés physiques et chimiques des farines d'étudier l'évolution dans le temps de la viscosité d'une solution aqueuse de farine.

La figure 4 matérialise l'impact du traitement à l'ozone sur la viscosité d'une solution contenant de la farine en concentration de matière sèche bien définie, en fonction du temps, et selon un processus de montée en température, de stabilisation, puis de refroidissement.

Sur cette figure, sont représentées deux courbes correspondant à une farine normale non traitée et à une farine traitée suivant les paramètres revendiqués dans la présente demande.

La courbe repérée « température » représente l'évolution de la température à laquelle est soumis l'échantillon contenant la farine durant le test. La partie de la courbe de température située la plus à gauche correspond à la température au début du test, c'est-à-dire à la température ambiante (environ 20°C), la deuxième partie de la courbe correspond à la montée graduelle en température de l'échantillon soumis au test, jusqu'à un maximum de 90°C. Le plateau, qui forme la troisième partie de la courbe, correspond au maintien de la température de l'échantillon durant la mesure de viscosité. La quatrième partie de la courbe, partie décroissante, correspond à la suppression du chauffage et à la redescente de la température de l'échantillon par un refroidissement contrôlé jusqu'à une valeur de stabilisation et d'équilibre supérieure à la température ambiante (environ 25°C).

Les courbes obtenues pour la farine normale et la farine traitée correspondent aux valeurs mesurées de la viscosité en unités RVA, soit à titre indicatif, une unité RVA étant égale à dix centipoises.

On observe sur ces courbes que le traitement par l'ozone des grains, préalablement à leur mouture, augmente considérablement la viscosité des solutions de farine correspondantes. Cette augmentation de la viscosité est induite par l'action de l'ozone sur l'amidon, et probablement également sur certaines amylases.

Ces courbes démontrent bien que l'ozone a pénétré en profondeur à l'intérieur des grains pour réagir sur les constituants de l'albumen (en la circonstance, amidon).

La figure 4 permet de comparer une farine traitée selon le procédé de la présente invention avec une farine normale analysées toutes les deux selon une procédure dite de RVA (Rapid Viscosity Analysis). On y voit que, non seulement la courbe est modifiée, mais surtout, que la viscosité finale d'une farine traitée est considérablement augmentée par rapport à une farine non traitée. On peut considérer qu'au moins en partie les changements au niveau des profils de viscosité des solutions de farines résultent des modifications de l'amidon. D'une part, l'ozone peut conduire à une réticulation de l'amidon, ce qui a pour conséquence une augmentation directe de la viscosité. D'autre part, l'amylase, enzyme qui hydrolyse l'amidon, est Inhibée par l'ozone.

Dans la mesure où l'ozone pénètre correctement à l'intérieur du grain, l'ozone peut agir sur les enzymes, qui sont stockées préférentiellement dans la couche à aleurone (voir figure 1). La modification de l'amylase par l'ozone entraîne un changement de conformation de l'amylase et la suppression, dans un fort pourcentage, de son activité. Cette inhibition de l'amylase a également été mise en évidence par la méthode dite du temps de Hagberg.

### 5) Effet de l'ozone sur la polyphénol oxydase la lipase et la lipoxygénase

Il a été observé, dans les conditions définies dans le cadre de la présente invention, que l'ozone inhibe des enzymes autres que l'amylase. L'inhibition par l'ozone de la polyphénol oxydase, la lipase et la lipoxygénase a pour conséquence directe un effet sur la couleur de la mie des produits obtenus à partir de farines issues de grains préalablement traités par l'ozone. Dans le cas d'un traitement par l'ozone, la mie est plus claire et les farines ainsi obtenues se conservent beaucoup mieux dans le temps. Il a été également observé par la Demanderesse que des farines issues de grains, préalablement traités par l'ozone, voyaient leur temps de conservation, en présence d'air, augmenter de 60 à 80%, voire dans..certains cas, de plus de 100%. Ceci s'explique par l'inhibition de la lipase par l'ozone qui favorise une stabilisation des farines et par l'absence d'oxydation des acides gras naturels.

### 6) Effet de l'ozone sur l'apparition du MDA (malondialdéhyde)

Le MDA est considéré comme un marqueur de la peroxydation des acides gras polyinsaturés possédant au moins deux doubles liaisons.

Le dosage du MDA total est réalisé par réaction avec l'acide thiobarbiturique (TBA). Le complexe entre une molécule de MDA et deux molécules de TBA peut ensuite être mesuré, soit par spectrophotométrie, soit par CLHP en phase Inverse. La réaction avec le TBA n'est pas spécifique du MDA et le dosage par spectrophotométrie peut être sujet à des interférences. Ses résultats sont le plus souvent exprimés en STBAR, ou Substances TBA-Réactives. Ce problème d'interférences est éliminé en dosant le complexe TBA-MDA par CLHP en phase inverse.

On a effectué des dosages du MDA, selon une méthode classique d'analyse en laboratoire, dans des farines issues de la mouture des grains après un traitement de ces derniers à l'ozone selon l'invention. Les quantités d'ozone utilisées sont comprises entre 5 et 12 g d'ozone/kg de blé. Il a été observé que le MDA diminue après traitement en fonction du degré d'humidification des grains et diminue proportionnellement avec la dose d'ozone appliquée. La diminution de MDA est significative, typiquement de l'ordre de 15 à 25%.

L'apparition du MDA étant un indice de l'activité d'enzymes oxydants, ces résultats confirment que le traitement à l'ozone, à partir du moment où ce dernier pénètre suffisamment à l'intérieur du grain, ralentit le processus oxydant, vraisemblablement par action sur les enzymes qui y participent.

Le traitement à l'ozone, selon la présente invention, a donc un effet stabilisant sur les processus oxydants. L'absence de l'activité lipoxygénagique confirme l'absence de l'oxydation lipidique.

### 7) Effet du pH de l'eau servant à l'humidification complémentaire

On a observé que l'impact de l'ozone sur les grains est très dépendant du pH de l'eau servant. à l'humidification complémentaire des grains de blé réalisée simultanément à la mise en contact avec l'ozone. Il s'est révélé très intéressant dans ce contexte d'étudier l'évolution de la viscosité dans le temps pendant un traitement thermique par la méthode RVA. A la figure 5, on voit les différents profils de viscosité des farines obtenues par traitement à l'ozone des grains qui ont fait l'objet d'une humidification complémentaire avec des solutions aqueuses de pH différents.

La figure 5 matérialise l'impact du pH de l'eau d'humidification complémentaire des grains sur la viscosité d'une farine obtenue à partir des grains traités selon un processus d'action en profondeur, cette viscosité étant étudiée par le processus RVA, comme pour les expériences représentées à la figure 4.

Les courbes représentatives de la variation de viscosité ont trait à deux variétés caractéristiques de blé tendre, qui sont, pour la variété 1, du blé tendre de type Courtot, c'est-à-dire un blé de force, la variété 2 correspond à un blé de type Shango, c'est-à-dire un blé tendre panifiable courant. Le témoin correspond à un blé de mélange pour panification courante.

L'augmentation ou la diminution de la viscosité est très dépendante de la variété de blé traitée, chaque variété ayant un comportement spécifique.

On constate qu'à pH basique, il y a une augmentation sensible de la viscosité de la pâte. Pour faire des pâtes plus visqueuses, les études de la Demanderesse ont montré que la plage préférentielle de pH de l'eau servant à l'humidification complémentaire se situe entre 8 et 13, et plus préférentiellement de pH 8,5 à 9,5.

En revanche à un pH acide, on voit une diminution de la viscosité par rapport à un témoin à pH neutre. Les essais de la Demanderesse ont montré qu'une plage préférentielle de pH pour la fabrication de pâtes moins visqueuses se situe entre 3 et 6.

Sans vouloir être liée par une quelconque interprétation théorique, la Demanderesse considère que l'ozone, en condition basique, donne lieu à une réactivité de type radicalaire, susceptible de conduire à une réticulation de l'amidon et, par conséquent, à un accroissement de la viscosité. En revanche, les études ont démontré qu'à pH acide, l'amidon pouvait être coupé par action sur les doubles liaisons ou les liaisons entre monomères, ce qui a pour conséquence de supprimer le phénomène de réticulation et donc de diminuer la viscosité.

L'ensemble de ces courbes démontre que l'action de l'ozone se passe en profondeur, puisque l'amidon contenu dans l'albumen se trouve modifié.

### CONCLUSION GENERALE

L'ensemble des observations résumées ci-dessus montre que, dans des conditions spécifiques, Il est possible de faire pénétrer, lors du traitement, l'ozone en profondeur à l'Intérieur des tissus, voire des cellules, d'une matière végétale non encore broyée, telle que des grains de blé. A ce jour, aucune méthode n'a été décrite permettant de faire pénétrer un gaz réactif à l'intérieur de structures végétales telles que des grains ou autres tissus intacts avant broyage. Les découvertes de la Demanderesse ont démontré qu'il était possible, à condition d'utiliser un temps de repos suffisant et de maîtriser l'humidification de structures, telles que les grains de blé, de faire pénétrer l'ozone au coeur de telles structures.

Toutes les applications demandant un accroissement de la viscosité d'une pâte réalisée à partir d'une farine de blé, et, simultanément, un gluten plus poreux laissant les gaz de cuisson s'échapper en traversant la masse de pâte sans faire de cloques, sont valorisées par ce type de traitement. Il s'agit de toutes les applications liées à la panure et à l'enrobage, mais également, comme indiqué précédemment, la fabrication de cakes anglais, de génoises et autres produits sucrés, ainsi que tous les gâteaux dont la structure est émulsionnée, c'est-à-dire contenant de la matière grasse, de l'eau et des émulsifiants, et dont l'un des modèles-types en Amérique du Nord est le « yellow layer cake ».

## Revendications

1. Procédé de traitement d'une matière végétale non broyée comprenant au moins les étapes suivantes :
a) pré-humidification de ladite matière végétale par ajout d'un volume d'eau ;
b) phase de repos de ladite matière végétale ainsi humidifiée ;
c) mise en contact de la dite matière végétale avec l'ozone ;
ladite phase de repos ayant une durée supérieure ou égale à 1 jour et le traitement à l'ozone étant réalisé à l'aide d'un gaz ozoné sec, le procédé comprenant également une humidification complémentaire réalisée simultanément à ou au maximum 10 minutes avant ladite mise en contact avec l'ozone dans des conditions permettant d'apporter de 3 à 10 % en poids d'eau à ladite matière végétale par rapport au poids sec de la matière et de préférence de 3 à 5 %.

2. Procédé selon la revendication 1, dans lequel la matière végétale comprend des grains de blé tendre.

3. Procédé selon la revendication 1, dans lequel la matière végétale comprend des grains de blé dur.

4. Procédé selon l'une quelconque des revendications 1 à 3, dans lequel l'eau servant à l'humidification complémentaire est non neutre et comprend un agent modificateur de pH.

5. Procédé selon la revendication 4, dans lequel le pH de l'eau servant à l'humidification complémentaire est compris entre 3 et 6.

6. Procédé selon la revendication 5, dans lequel l'acidité de l'eau servant à l'humidification complémentaire est apportée par l'acide citrique, de l'acide acétique ou tout autre acide faible de qualité alimentaire.

7. Procédé selon la revendication 4, dans lequel le pH de l'eau servant à l'humidification complémentaire est compris entre 8 et 12.

8. Procédé selon la revendication 7, dans lequel la basicité de l'eau servant à l'humidification complémentaire est assurée par la soude de qualité alimentaire, le carbonate de sodium, le bicarbonate de sodium ou tout autre produit basique de qualité alimentaire.

9. Procédé selon l'une quelconque des revendications 1 à 8, dans lequel le temps de repos se situe entre 24 et 72 heures, de préférence entre 36 et 48 heures.

10. Procédé selon l'une quelconque des revendications 1 à 9, dans lequel l'eau servant à l'humidification complémentaire est apportée à la matière végétale sous la forme d'un brouillard constitué de gouttelettes fines produites par la pulvérisation sous pression de l'eau.

11. Procédé selon l'une quelconque des revendications 2 à 8, dans lequel 3 à 5% d'eau en poids par rapport aux grains sont apportés au cours de la pré-humidification afin d'amener le taux d'humidité des grains à une valeur située entre 16 et 18%.

12. Procédé selon l'une quelconque des revendications 2 à 11, dans lequel, préalablement à la pré-humidification, des grains cassés sont introduits, la quantité des grains cassés se situant entre 0,5 et 20% de la masse totale des grains, et préférablement entre 3 et 10%.

13. Procédé selon l'une quelconque des revendications 1 à 12, dans lequel la quantité d'ozone utilisée se situe entre 6 et 20 g d'ozone/kg de la matière végétale, et de préférence entre 7 et 13 g d'ozone/kg.

14. Procédé selon l'une quelconque des revendications 1 à 13, dans lequel la concentration d'ozone dans le gaz vecteur ozoné se situe entre 60 et 200 g/m³ tpn, et de préférence entre 80 et 140 g/m³ tpn.

15. Procédé selon l'une quelconque des revendications 1 à 14, dans lequel la pression du gaz ozoné se situe entre 200 et 1100 mbars, et de préférence entre 600 et 800 mbars.

16. Procédé de fabrication de farines qui comprend le traitement à l'ozone de grains de blé tendre selon l'une quelconque des revendications 1 à 15, et qui comprend une étape supplémentaire de broyage des grains ainsi traités.

17. Procédé selon la revendication 16, dans lequel les paramètres de procédé de traitement des grains de blé tendre sont choisis de telle façon que, après l'étape du broyage des grains, la viscosité de la farine résultante est augmentée, par rapport à une farine issue de grains non traités, d'un pourcentage compris entre 10 et 50%, et le rapport P/L de la farine est supérieur à 2,5 et plus préférentiellement supérieur à 3,5.

18. Farines issues d'un procédé selon la revendication 17.

19. Procédé de fabrication de semoules ou de pâtes alimentaires qui comprend le traitement à l'ozone de grains de blé dur selon l'une quelconque des revendications 1 à 15, et qui comprend une étape supplémentaire de broyage des grains ainsi traités.

20. Procédé selon l'une quelconque des revendications 1, 4 à 10 ou 13 à 15, dans lequel la matière végétale comprend des graines d'une plante légumineuse, de préférence le soja, le pois, la caroube, le guar, le colza, le chou, le lin.

## Claims

1. Process for the treatment of an unground plant material which comprises at least the following steps:
a) prehumidification of said plant material by the addition of a volume of water;
b) a rest phase for the thus humidified plant material;
c) exposure of said plant material to ozone,
the said rest phase having a duration greater than or equal to 1 day and the ozone treatment being carried out with a dry ozone-containing gas, the process also comprising a complementary humidification carried out simultaneously with, or at most 10 minutes before, said exposure to ozone under conditions that make it possible to add from 3 to 10% and preferably from 3 to 5% by weight of water to said plant material, based on the dry weight of the material.

2. Process according to claim 1 in which the plant material comprises soft wheat grains.

3. Process according to claim 1 in which the plant material comprises hard wheat grains.

4. Process according to any one of claims 1 to 3 in which the water used for complementary humidification is non-neutral and comprises a pH modifier.

5. Process according to claim 4 in which the pH of the water used for complementary humidification is between 3 and 6.

6. Process according to claim 5 in which the acidity of the water used for complementary humidification is provided by citric acid, acetic acid or any other food-grade weak acid.

7. Process according to claim 4 in which the pH of the water used for complementary humidification is between 8 and 12.

8. Process according to claim 7 in which the basicity of the water used for complementary humidification is provided by food-grade sodium hydroxide, sodium carbonate, sodium bicarbonate or any other food-grade basic product.

9. Process according to any one of claims 1 to 8 in which the rest period is between 24 and 72 hours and preferably between 36 and 48 hours.

10. Process according to any one of claims 1 to 9 in which the water used for complementary humidification is added to the plant material in the form of a mist consisting of fine droplets produced by spraying the water under pressure.

11. Process according to any one of claims 2 to 8 in which 3 to 5% by weight of water, based on the grains, is added during the prehumidification in order to increase the moisture content of the grains to a value of between 16 and 18%.

12. Process according to any one of claims 2 to 11 in which broken grains are introduced prior to prehumidification, the amount of broken grains being between 0.5 and 20% and preferably between 3 and 10% of the total weight of the grains.

13. Process according to any one of claims 1 to 12 in which the amount of ozone used is between 6 and 20 g of ozone/kg of plant material and preferably between 7 and 13 g of ozone/kg.

14. Process according to any one of claims 1 to 13 in which the concentration of ozone in the ozone-containing carrier gas is between 60 and 200 g/m³ NTP and preferably between 80 and 140 g/m³ NTP.

15. Process according to any one of claims 1 to 14 in which the pressure of the ozone-containing gas is between 200 and 1100 mbar and preferably between 600 and 800 mbar.

16. Process for the manufacture of flours which comprises treating soft wheat grains with ozone according to any one of claims 1 to 15, and which comprises an additional step of grinding the treated grains.

17. Process according to claim 16 in which the parameters of the process for the treatment of soft wheat grains are chosen in such a way that, after the grain grinding step, the viscosity of the resulting flour is increased by between 10 and 50%, relative to a flour derived from untreated grains, and the P/L ratio of the flour is greater than 2.5 and particularly preferably greater than 3.5.

18. Flours produced by a process according to claim 17.

19. Process for the manufacture of semolinas or pastas which comprises treating hard wheat grains with ozone according to any one of claims 1 to 15, and which comprises an additional step for grinding the treated grains.

20. Process according to any one of claims 1, 4 to 10 or 13 to 15 in which the plant material includes seeds of a leguminous plant, preferably soya, pea, carob, guar, colza, cabbage or flax.

## Patentansprüche

1. Verfahren zur Behandlung eines ungemahlenen Pflanzenmaterials, das wenigstens die nachfolgenden Schritte umfaßt:
a) Vorbefeuchtung des Pflanzenmaterials durch Zugabe eines Wasservolumens;
b) Phase des Ruhens des so befeuchteten Pflanzenmaterials;
c) Inkontaktbringen des Pflanzenmaterials mit dem Ozon;
wobei die Dauer der genannten Ruhephase mehr als oder gleich 1 Tag beträgt und die Ozonbehandlung mit Hilfe eines trockenen ozonhaltigen Gases durchgeführt wird,
wobei das Verfahren auch eine ergänzende Befeuchtung umfaßt, die gleichzeitig mit oder maximal 10 Minuten vor dem Inkontaktbringen mit dem Ozon unter Bedingungen durchgeführt wird, die ermöglichen, dem Pflanzenmaterial zwischen 3 und 10 Gew.-% Wasser, bezogen auf das Trockengewicht des Materials, und vorzugsweise zwischen 3 und 5 % zuzuführen.

2. Verfahren nach Anspruch 1, bei dem das Pflanzenmaterial Weichweizenkörner umfaßt.

3. Verfahren nach Anspruch 1, bei dem das Pflanzenmaterial Hartweizenkörner umfaßt.

4. Verfahren nach irgendeinem der Ansprüche 1 bis 3, bei dem das zur ergänzenden Befeuchtung dienende Wasser nicht neutral ist und einen pH-Modifizierer aufweist.

5. Verfahren nach Anspruch 4, bei dem der pH-Wert des zur ergänzenden Befeuchtung dienenden Wassers zwischen 3 und 6 liegt.

6. Verfahren nach Anspruch 5, bei dem der Säuregehalt des zur ergänzenden Befeuchtung dienenden Wassers durch Zitronensäure, Essigsäure oder jede andere schwache Säure mit Lebensmittelqualität verliehen wird.

7. Verfahren nach Anspruch 4, bei dem der pH-Wert des zur ergänzenden Befeuchtung dienenden Wassers zwischen 8 und 12 liegt.

8. Verfahren nach Anspruch 7, bei dem die Basizität des zur ergänzenden Befeuchtung dienenden Wassers durch Soda mit Lebensmittelqualität, Natriumkarbonat, Natriumbikarbonat oder jedwedes andere basische Produkt mit Lebensmittelqualität sichergestellt wird.

9. Verfahren nach irgendeinem der Ansprüche 1 bis 8, bei dem die Ruhezeit zwischen 24 und 72 Stunden, vorzugsweise zwischen 36 und 48 Stunden beträgt.

10. Verfahren nach irgendeinem der Ansprüche 1 bis 9, bei dem das zur ergänzenden Befeuchtung dienende Wasser dem Pflanzenmaterial in Form eines Nebels zugeführt wird, der von feinen Tröpfchen gebildet wird, die durch das Zerstäuben des Wassers unter Druck erzeugt werden.

11. Verfahren nach irgendeinem der Ansprüche 2 bis 8, bei dem zwischen 3 und 5 Gew.-% Wasser bezogen auf die Körner im Laufe der Vorbefeuchtung zugegeben werden, um den Feuchtigkeitsgrad der Körner auf einen Wert zwischen 16 und 18 % zu bringen.

12. Verfahren nach irgendeinem der Ansprüche 2 bis 11, bei dem vor der Vorbefeuchtung zerkleinerte Körner eingebracht werden, wobei die Menge der zerkleinerten Körner zwischen 0,5 und 20 % der Gesamtmasse der Körner und vorzugsweise zwischen 3 und 10 % liegt.

13. Verfahren nach irgendeinem der Ansprüche 1 bis 12, bei dem die verwendete Ozonmenge zwischen 6 und 20 g Ozon/kg des Pflanzenmaterials und vorzugsweise zwischen 7 und 13 g Ozon/kg beträgt.

14. Verfahren nach irgendeinem der Ansprüche 1 bis 13, bei dem die Ozonkonzentration in dem ozonhaltigen Trägergas zwischen 60 und 200 g/m³ tpn und vorzugsweise zwischen 80 und 140 g/m³ tpn beträgt.

15. Verfahren nach irgendeinem der Ansprüche 1 bis 14, bei dem der Druck des ozonhaltigen Gases zwischen 200 und 1100 mbar und vorzugsweise zwischen 600 und 800 mbar liegt.

16. Verfahren zur Herstellung von Mehlen, das die Ozonbehandlung von Weichweizenkörnern nach irgendeinem der Ansprüche 1 bis 15 umfaßt und das einen zusätzlichen Schritt zum Mahlen der so behandelten Körner umfaßt.

17. Verfahren nach Anspruch 16, bei dem die Parameter des Verfahrens zur Behandlung der Weichweizenkörner derart gewählt werden, daß nach dem Schritt des Mahlens der Körner die Viskosität des hergestellten Mehls, im Vergleich zu einem Mehl aus unbehandelten Körnern, um einen Prozentsatz zwischen 10 und 50 % erhöht ist und das P/L-Verhältnis des Mehls über 2,5 und weiterhin vorzugsweise über 3,5 liegt.

18. Mehle, die aus einem Verfahren nach Anspruch 17 hervorgegangen sind.

19. Verfahren zur Herstellung von Grießen oder Lebensmittelteigen, das die Ozonbehandlung von Hartweizenkörnern nach irgendeinem der Ansprüche 1 bis 15 umfaßt und das einen zusätzlichen Schritt zum Mahlen der so behandelten Körner umfaßt.

20. Verfahren nach irgendeinem der Ansprüche 1, 4 bis 10 oder 13 bis 15, bei dem das Pflanzenmaterial Samen einer Hülsenfrucht, vorzugsweise Soja, Erbse, Johannisbrot, Guar, Raps, Kohl, Lein umfaßt.
